(19) Europäisches Patentamt / European Patent Office / Office européen des brevets

(11) EP 4 362 363 A1

(12) EUROPÄISCHE PATENTANMELDUNG

(43) Veröffentlichungstag:
01.05.2024 Patentblatt 2024/18

(21) Anmeldenummer: 22204426.5

(22) Anmeldetag: 28.10.2022

(51) Internationale Patentklassifikation (IPC):
H04L 1/00 (2006.01)  H04L 67/12 (2022.01)
H04L 9/40 (2022.01)  G06F 21/64 (2013.01)
H03M 13/09 (2006.01)

(52) Gemeinsame Patentklassifikation (CPC):
H04L 63/123; G06F 21/64; H03M 13/09;
H04L 1/0041; H04L 1/0061; H04L 1/24;
H04L 63/0428

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(71) Anmelder: Siemens Mobility GmbH
81739 München (DE)

(72) Erfinder:
• Grabe, Wolfgang
38154 Königslutter (DE)
• Gückel, Hartmut
31228 Peine (DE)

(74) Vertreter: Siemens Patent Attorneys
Postfach 22 16 34
80506 München (DE)

(54) **VERFAHREN UND SYSTEME ZUM BEARBEITEN VON NUTZDATEN**

(57) Die Erfindung bezieht sich unter anderem auf ein Verfahren zum Bearbeiten von Nutzdaten (ND). Erfindungsgemäß ist vorgesehen, dass ein sicherer Rechenanlagenabschnitt (10) einer Rechenanlage (100, 110) unter Heranziehung der Nutzdaten (ND) und einer vorgegebenen Sicherungsfunktion (CRC) Sicherungsdaten (CRC(ND)) erzeugt und mit den Sicherungsdaten (CRC(ND)) und den Nutzdaten (ND) geschützte Nutzdaten (ND*) bildet, der sichere Rechenanlagenabschnitt (10) die mit den Sicherungsdaten (CRC(ND)) geschützten Nutzdaten (ND*) zu einem nichtsicheren Rechenanlagenabschnitt (20) derselben oder einer anderen Rechenanlage (100, 120) transferiert, der nichtsichere Rechenanlagenabschnitt (20) die dort empfangenen Daten als Quelldaten (ND**) zur Bildung eines Sicherungsanhangs (SA) heranzieht, der nichtsichere Rechenanlagenabschnitt (20) den Sicherungsanhang (SA) in den sicheren Rechenanlagenabschnitt (10) transferiert und der sichere Rechenanlagenabschnitt (10) die dort zuvor gebildeten geschützten Nutzdaten (ND*) und den empfangenen Sicherungsanhang (SA) weiterbearbeitet.

FIG 2

EP 4 362 363 A1

**Beschreibung**

Die Erfindung bezieht sich auf Verfahren, Rechnersysteme, eisenbahntechnische Komponenten und Computerprogrammprodukte zum Bearbeiten von Nutzdaten sowie auf Schienenfahrzeuge, die entsprechend betrieben werden bzw. mit derartigen Komponenten ausgestattet sind.

Aus der europäischen Patentschrift EP 3 659 317 B1 ist ein Verfahren zum Erzeugen eines Steuersignals bekannt, mit dem sich ein Aussenden eines Datentelegramms verhindern lässt. Im Detail beschreibt die Patentschrift ein Verfahren zum Bereitstellen eines sicheren Telegramms mit einem Nutzdaten aufweisenden Nutzdatenteil und einem Prüfdatenteil, wobei der Prüfdatenteil unverfälschte Originalnutzdaten repräsentiert. Die Originalnutzdaten werden in einer sicheren Softwareumgebung gespeichert. Eine Nutzdatenkopie der Originalnutzdaten wird außerhalb der sicheren Softwareumgebung gespeichert. Der Prüfdatenteil mit Originalprüfdaten wird in der sicheren Softwareumgebung oder außerhalb der sicheren Softwareumgebung erzeugt, und eine Prüfdatenkopie der Originalprüfdaten wird außerhalb der sicheren Softwareumgebung gespeichert, wenn der Prüfdatenteil in der sicheren Softwareumgebung erzeugt wurde. Eine Kopie der Nutzdatenkopie wird in der sicheren Softwareumgebung mit den Originalnutzdaten und/oder einer Repräsentation der Originalnutzdaten verglichen, und/oder es wird eine Kopie der Prüfdatenkopie in der sicheren Softwareumgebung mit den Originalprüfdaten und/oder der Repräsentation der Originalprüfdaten verglichen. Das Telegramm wird mit der Nutzdatenkopie als Nutzdaten und dem Prüfdatenteil erst bereitgestellt, wenn der Vergleich ergeben hat, dass die Kopie der Nutzdatenkopie den Originalnutzdaten entspricht und/oder die Kopie der Prüfdatenkopie den Originalprüfdaten entspricht.

Der Erfindung liegt die Aufgabe zugrunde, ein Verfahren zum Bearbeiten von Nutzdaten anzugeben, bei dem ein hohes Maß an Sicherheit mit vergleichsweise geringem Rechenaufwand in sicheren Rechenanlagenabschnitten erreicht werden kann.

Diese Aufgabe wird erfindungsgemäß durch ein Verfahren mit den Merkmalen gemäß Patentanspruch 1 gelöst; vorteilhafte Ausgestaltungen des erfindungsgemäßen Verfahrens sind in Unteransprüchen angegeben.

Danach ist erfindungsgemäß vorgesehen, dass ein sicherer Rechenanlagenabschnitt einer Rechenanlage unter Heranziehung der Nutzdaten und einer vorgegebenen Sicherungsfunktion Sicherungsdaten erzeugt und mit den Sicherungsdaten und den Nutzdaten geschützte Nutzdaten bildet, der sichere Rechenanlagenabschnitt die mit den Sicherungsdaten geschützten Nutzdaten zu einem nichtsicheren Rechenanlagenabschnitt derselben oder einer anderen Rechenanlage transferiert, der nichtsichere Rechenanlagenabschnitt die dort empfangenen Daten als Quelldaten zur Bildung eines Sicherungsanhangs heranzieht, der nichtsichere Rechenanlagenabschnitt den Sicherungsanhang in den sicheren Rechenanlagenabschnitt transferiert und der sichere Rechenanlagenabschnitt die dort zuvor gebildeten geschützten Nutzdaten und den empfangenen Sicherungsanhang weiterbearbeitet.

Ein wesentlicher Vorteil des erfindungsgemäßen Verfahrens besteht darin, dass dem sicheren Rechenanlagenabschnitt nicht nur die selbst gebildeten Sicherungsdaten, die wegen der Bildung im sicheren Rechenanlagenabschnitt als sicher angesehen werden können, sondern auch der im nichtsicheren Rechenanlagenabschnitt gebildete Sicherungsanhang, der wegen der Bildung im nichtsicheren Rechenanlagenabschnitt als nichtsicher angesehen werden muss, zur Verfügung stehen. Die Weiterbearbeitung der Nutzdaten im sicheren Rechenanlagenabschnitt kann somit sowohl auf der Basis der eigenen, sicheren Sicherungsdaten, als auch des fremden nichtsicheren Sicherungsanhangs erfolgen. Beispielsweise können die Nutzdaten sowohl mit den sicheren Sicherungsdaten also auch mit dem nichtsicheren Sicherungsanhang extern ausgegeben werden. Eine externe Überprüfung der von dem sicheren Rechenanlagenabschnitt ausgegebenen Nutzdaten kann in diesem Falle in vorteilhafter Weise zweistufig erfolgen: In einer Stufe kann geprüft werden, ob der Sicherungsanhang zu den Nutzdaten passt oder nicht. Zwar ist der Sicherungsanhang als solcher nichtsicher, jedoch ist es sehr unwahrscheinlich, dass ein falsch gebildeter oder nachträglich verfälschter Sicherungsanhang zu den Nutzdaten passen kann. Wird der Test des Sicherungsanhangs bestanden, so kann im Rahmen eines weiteren Tests zusätzlich geprüft werden, ob die Sicherheitsdaten, die in den geschützten Nutzdaten enthalten sind oder mit diesen ausgegeben wurden, zu den Nutzdaten passen oder nicht. Zusammengefasst ist eine externe Prüfung sowohl auf der Basis des nichtsicheren Sicherungsanhangs als auch auf der Basis der sicheren Sicherungsdaten möglich, wobei die Nutzdaten, der nichtsichere Sicherungsanhang und die sicheren Sicherungsdaten vorzugsweise nur dann als gültig angesehen werden, wenn die obigen Tests beide bestanden werden, also sowohl der Sicherungsanhang als auch die Sicherungsdaten zu den Nutzdaten passen.

Ein weiterer wesentlicher Vorteil des erfindungsgemäßen Verfahrens besteht darin, dass der Sicherungsanhang, der den zusätzlichen Test ermöglicht, in dem nichtsicheren Rechenanlagenabschnitt gebildet wird. Da nichtsichere Rechenanlagenabschnitte im Unterschied zu sicheren Rechenanlagenabschnitten bei vergleichsweise geringem Hardware- und Softwareaufwand sehr hohe Rechenleistungen ermöglichen, kann das Errechnen des Sicherungsanhangs auf sehr aufwändigen komplexen Algorithmen beruhen.

Ein weiterer wesentlicher Vorteil des erfindungsgemäßen Verfahrens besteht darin, dass der sichere Rechenanlagenabschnitt mit der Berechnung des Sicherungsanhangs nicht behelligt wird und er lediglich die Sicherungsdaten bilden können muss; diese beruhen vorzugsweise auf weniger komplexen Algorithmen als der Sicherungsanhang, sodass der sichere Rechenanlagenabschnitt hard- und softwaremäßig einfacher ausgestaltet sein kann, als dies bei einer zusätzlichen Zuweisung der Berechnung des Sicherungsanhangs der Fall sein würde. Mit anderen Worten ermöglicht das Hinzuziehen des nichtsicheren Rechenanlagenabschnitts den Einsatz eines vergleichsweise hard- und/oder softwaremäßig einfachen sicheren Rechenanlagenabschnitts.

Mit Blick auf eine möglichst geringe Rechenbelastung des sicheren Rechenanlagenabschnitts wird es als vorteilhaft angesehen, wenn die Berechnung der Sicherungsfunktion im sicheren Rechenanlagenabschnitt einen geringeren Rechenaufwand erfordert als die Berechnung des Sicherungsanhangs im nichtsicheren Rechenanlagenabschnitt.

Bei einer als besonders vorteilhaft angesehenen Ausführungsvariante ist vorgesehen, dass, nachdem der nichtsichere Rechenanlagenabschnitt den Sicherungsanhang gebildet hat, der nichtsichere Rechenanlagenabschnitt die zur Bildung des Sicherungsanhangs herangezogenen Quelldaten ebenfalls in den sicheren Rechenanlagenabschnitt transferiert und der sichere Rechenanlagenabschnitt die vom nichtsicheren Rechenanlagenabschnitt erhaltenen Quelldaten mit den zuvor selbst gebildeten, geschützten Nutzdaten inhaltlich vergleicht.

Der Sicherungsanhang wird vorzugsweise als ungültig verworfen, wenn die Quelldaten von den zuvor im sicheren Rechenanlagenabschnitt gebildeten, geschützten Nutzdaten über ein vorgegebenes Maß hinaus abweichen. Diese Maßnahme geht von dem Gedanken aus, dass der Sicherungsanhang falsch sein muss, wenn die zu dessen Berechnung herangezogenen Quelldaten falsch waren.

Der Sicherungsanhang wird vorzugsweise als gültig angesehen, wenn die Quelldaten mit den zuvor im sicheren Rechenanlagenabschnitt gebildeten, geschützten Nutzdaten in einem vorgegebenen Maß übereinstimmen.

Die Weiterbearbeitung der geschützten Nutzdaten und des Sicherungsanhangs umfasst vorzugsweise das Abspeichern der geschützten Nutzdaten und des Sicherungsanhangs in einem Speicherabschnitt außerhalb des genannten sicheren Rechenanlagenabschnitts und außerhalb des genannten nichtsicheren Rechenanlagenabschnitts. Diese Weiterbearbeitung erfolgt vorzugsweise ausschließlich dann, wenn der Sicherungsanhang als gültig angesehen wird.

Vorteilhaft ist es, wenn sich der genannte Speicherabschnitt in einer Rechenanlage befindet, die eine von der Rechenanlage mit dem sicheren Rechenanlagenabschnitt und der Rechenanlage mit dem nichtsicheren Rechenanlagenabschnitt unabhängige weitere Rechenanlage ist.

Alternativ oder zusätzlich kann die Weiterbearbeitung der geschützten Nutzdaten und des Sicherungsanhangs in vorteilhafter Weise das Einbetten der geschützten Nutzdaten und des Sicherungsanhangs in ein Datentelegramm und das Übermitteln des Datentelegramms zu einer weiteren Rechenanlage umfassen. Auch die letztgenannte Art der Weiterbearbeitung erfolgt vorzugsweise ausschließlich dann, wenn der Sicherungsanhang als gültig angesehen wird.

Die vorgegebene Sicherungsfunktion umfasst vorzugsweise die Bildung eines zyklischen Redundanzcodes; alternativ kann sie auch auf die Bildung eines zyklischen Redundanzcodes beschränkt sein.

Die Erfindung bezieht sich außerdem auf ein Rechnersystem. Erfindungsgemäß ist bezüglich des Rechnersystems vorgesehen, dass dieses einen sicheren Rechenanlagenabschnitt und einen unsicheren Rechenanlagenabschnitt umfasst, die derart programmiert sind, dass sie gemeinsam ein Verfahren wie oben beschrieben ausführen können. Bezüglich der Vorteile des erfindungsgemäßen Rechnersystems und dessen vorteilhafter Ausgestaltungen sei auf die obigen Ausführungen im Zusammenhang mit dem erfindungsgemäßen Verfahren und dessen vorteilhafter Ausgestaltungen verwiesen.

Die Erfindung bezieht sich außerdem auf ein Computerprogrammprodukt. Diebezüglich ist erfindungsgemäß vorgesehen, dass das Computerprogrammprodukt einen sicheren Programmteil zur Installation in einem sicheren Rechenanlagenabschnitt und einen weiteren Programmteil zur Installation in einem nichtsicheren Rechenanlagenabschnitt umfasst, wobei die beiden Programmteile bei Ausführung durch ihren jeweiligen Rechenanlagenabschnitt diese veranlassen, gemeinsam ein Verfahren wie oben beschrieben auszuführen. Bezüglich der Vorteile des erfindungsgemäßen Computerprogrammprodukts und dessen vorteilhafter Ausgestaltungen sei auf die obigen Ausführungen im Zusammenhang mit dem erfindungsgemäßen Verfahren und dessen vorteilhafter Ausgestaltungen verwiesen.

Die Erfindung bezieht sich außerdem auf eine eisenbahntechnische Komponente. Erfindungsgemäß ist bezüglich der eisenbahntechnischen Komponente vorgesehen, dass diese ein Rechensystem, wie oben beschrieben, aufweist oder ein erfindungsgemäßes Verfahren, wie oben beschrieben, ausführen kann. Bezüglich der Vorteile der eisenbahntechnischen Komponente und deren vorteilhafter Ausgestaltungen sei auf die obigen Ausführungen im Zusammenhang mit dem erfindungsgemäßen Verfahren und dessen vorteilhafter Ausgestaltungen verwiesen.

Die eisenbahntechnische Komponente kann beispielsweise ein Bestandteil, beispielsweise ein Fahrzeugsteuergerät, eines Schienenfahrzeugs sein oder in ein Fahrzeugsteuergerät integriert sein.

Ein sicherer Rechenanlagenabschnitt der eisenbahntechnischen Komponente ist vorzugsweise dazu ausgestaltet, die geschützten Nutzdaten und den Sicherungsanhang an eine streckenseitige Einrichtung, an ein Fahrzeugsteuergerät eines anderen Schienenfahrzeugs oder an eine andere Fahrzeugkomponente des eigenen Schienenfahrzeugs zu übermitteln.

Die Erfindung bezieht sich außerdem auf ein Schienenfahrzeug. Erfindungsgemäß ist vorgesehen, dass das Schienenfahrzeug zumindest eine eisenbahntechnische Komponente wie oben beschrieben umfasst.

Die Erfindung wird nachfolgend anhand von Ausführungsbeispielen näher erläutert; dabei zeigen beispielhaft

Figur 1    ein Ausführungsbeispiel für ein einteiliges Rechnersystem, das zur Durchführung eines erfindungsgemäßen Verfahrens geeignet ist, wobei anhand der Figur 1 ein erstes Ausführungsbeispiel für ein erfindungsgemäßes Verfahren erläutert wird,

Figur 2    das Rechnersystem gemäß Figur 1, wobei anhand der Figur 2 ein zweites Ausführungsbeispiel für ein erfindungsgemäßes Verfahren erläutert wird,

Figur 3    ein Ausführungsbeispiel für ein mehrteiliges Rechnersystem, das zur Durchführung des im Zusammenhang mit der Figur 2 erläuterten Verfahrens geeignet ist,

Figur 4    ein Ausführungsbeispiel für ein mehrteiliges Rechnersystem, das zur Durchführung des im Zusammenhang mit der Figur 1 erläuterten Verfahrens geeignet ist,

Figur 5    ein Ausführungsbeispiel für eine erfindungsgemäße eisenbahntechnische Komponente, und

Fig. 6-7    ein Ausführungsbeispiel für ein erfindungsgemäßes Schienenfahrzeug.

In den Figuren werden der Übersicht halber für identische oder vergleichbare Komponenten dieselben Bezugszeichen verwendet.

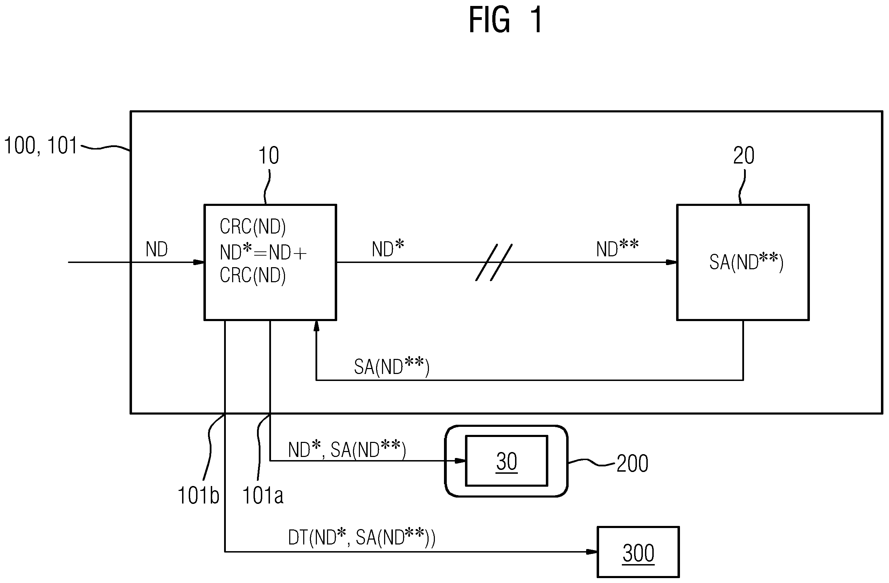

Die Figur 1 zeigt ein Ausführungsbeispiel für ein erfindungsgemäßes einteiliges Rechnersystem 101, das durch eine einzige Rechenanlage 100 gebildet ist. Anhand der Figur 1 wird nachfolgend ein erstes Ausführungsbeispiel für ein erfindungsgemäßes Verfahren erläutert.

Die Rechenanlage 100, nachfolgend zur Unterscheidung von weiteren in den Figuren gezeigten Rechenanlagen erste Rechenanlage genannt, umfasst einen sicheren Rechenanlagenabschnitt 10 und einen nichtsicheren Rechenanlagenabschnitt 20, die voneinander sicherungstechnisch getrennt sind, sei es software- und/oder hardwaremäßig.

Die Rechenanlage 100 ist mit einem Anschluss 101a ausgestattet, der eine Verbindung mit einem Speicherabschnitt 30 außerhalb der ersten Rechenanlage 100 ermöglicht. Der Speicherabschnitt 30 kann einen Bestandteil einer zweiten Rechenanlage 200 bilden, die von der ersten Rechenanlage 100 unabhängig ist.

Außerdem weist die erste Rechenanlage 100 einen weiteren Anschluss 101b auf, an dem ein Datentelegramm DT ausgesendet werden kann, beispielsweise zu einer dritten Rechenanlage 300.

Die erste Rechenanlage 100 gemäß Figur 1 arbeitet beispielsweise wie folgt:
Der sichere Rechenanlagenabschnitt 10 erzeugt unter Heranziehung von Nutzdaten ND und einer vorgegebenen Sicherungsfunktion CRC Sicherungsdaten CRC(ND) und bildet mit den Sicherungsdaten CRC(ND) und den Nutzdaten ND geschützte Nutzdaten ND*. Die geschützten Nutzdaten ND* können beispielsweise durch Anhängen der Sicherungsdaten CRC(ND) an die ungeschützten Nutzdaten ND gebildet werden, zum Beispiel gemäß:

$$ND* = (ND, \ CRC(ND))$$

Die Sicherungsfunktion CRC umfasst vorzugsweise zumindest auch die Bildung eines zyklischen Redundanzcodes.

Bei den Nutzdaten ND handelt es sich vorzugsweise um Sensordaten, Steuerdaten und oder Steuerbefehle wie beispielsweise Fahr- oder Bremsbefehle.

Anschließend transferiert der sichere Rechenanlagenabschnitt 10 die durch die Sicherungsdaten CRC(ND) geschützten Nutzdaten ND* zu dem nichtsicheren Rechenanlagenabschnitt 20 der ersten Rechenanlage 100.

Der nichtsichere Rechenanlagenabschnitt 20 empfängt die Daten des sicheren Rechenanlagenabschnitts 10 und zieht sie als Quelldaten ND** zur Bildung eines Sicherungsanhangs SA heran, der somit von den Quelldaten ND** abhängig ist.

Um ein besonders hohes Maß an Sicherheitsgewinn zu erzielen, ist die Berechnung des Sicherungsanhangs SA im nichtsicheren Rechenanlagenabschnitt 20 mit einem deutlich größeren Rechenaufwand verbunden als die Berechnung der Sicherungsfunktion CRC im sicheren Rechenanlagenabschnitt 10. Mit anderen Worten wird die Rechenleistung zur Datensicherung primär dem nichtsicheren Rechenanlagenabschnitt 20 zugewiesen, wodurch ermöglicht wird, den sicheren Rechenanlagenabschnitt 10 hardwaremäßig einfach und kostengünstig auszuführen.

Anschließend übermittelt der nichtsichere Rechenanlagenabschnitt 20 seinen Sicherungsanhang SA zu dem sicheren Rechenanlagenabschnitt 10, der die selbst gebildeten geschützten Nutzdaten ND* und den empfangenen Sicherungsanhang SA weiterbearbeitet.

Die Weiterbearbeitung der geschützten Nutzdaten ND* und des empfangenen Sicherungsanhangs SA(ND**) kann beispielsweise das Abspeichern der geschützten Nutzdaten (ND*) und des Sicherungsanhangs SA(ND**) in dem Speicherabschnitt 30 außerhalb der ersten Rechenanlage 100 umfassen.

Alternativ oder zusätzlich kann die Weiterbearbeitung der geschützten Nutzdaten ND* und des empfangenen Sicherungsanhangs SA(ND**) das Einbetten der geschützten Nutzdaten ND* und des Sicherungsanhangs SA(ND**) in ein Datentelegramm DT und das Übermitteln des Datentelegramms DT(ND*, SA(ND**)) an die dritte Rechenanlage 300 umfassen.

Anhand des Sicherungsanhangs SA(ND**) können die zweite Rechenanlage 200 und die dritte Rechenanlage 300 jeweils prüfen, ob die Nutzdaten ND unverfälscht abgespeichert wurden und/oder unverfälscht im Datentelegramm DT übermittelt wurden.

Zu diesem Zwecke können die zweite Rechenanlage 200 und die dritte Rechenanlage 300 beispielsweise selbst die ihnen bekannte Berechnung von Sicherungsanhängen durchführen und auf die empfangenen geschützten Nutzdaten ND* anwenden; anschließend können sie prüfen, ob der selbst ermittelte Sicherungsanhang mit dem empfangenen Sicherungsanhang SA(ND**) übereinstimmt. Ist dies nicht der Fall, so wird auf einen Fehler geschlossen und die empfangenen Nutzdaten ND* werden verworfen.

Stimmt hingegen der selbst ermittelte Sicherungsanhang mit dem empfangenen Sicherungsanhang SA(ND**) überein, so kann anschließend noch eine weitere eigene Überprüfung anhand der bekannten Sicherungsfunktion CRC erfolgen, indem diese auf die in den geschützten Nutzdaten ND* enthaltenen Nutzdaten ND angewandt wird. Stimmt das Ergebnis dieser Sicherungsfunktionsberechnung mit den in den geschützten Nutzdaten ND* enthaltenen Sicherungsdaten CRC(ND) überein, so können die Nutzdaten ND insgesamt als gültig angesehen und ausgewertet werden; andernfalls werden sie verworfen.

Die beschriebene Arbeitsweise gewährleistet eine besonders hohe Wahrscheinlichkeit dafür, dass etwaige Fehler aufgedeckt werden können, wobei der Großteil des Rechenaufwands in nichtsicheren Rechenanlagenabschnitten durchgeführt werden kann.

Aufgrund des zweistufigen Verfahrensverlaufs lässt sich nämlich in vorteilhafter Weise der Hauptrechenaufwand für die Berechnung der Sicherungsinformationen, die insgesamt aus den Sicherungsdaten CRC(ND) und dem Sicherungsanhang SA(ND**) bestehen, in den nichtsicheren Rechenanlagenabschnitt 20 verlagern, wodurch der sichere Rechenanlagenabschnitt 10 entlastet wird. Diese Verlagerung kann in einfacher Weise dadurch erfolgen, dass die Berechnung des Sicherungsanhangs SA im nichtsicheren Rechenanlagenabschnitt 20 deutlich aufwändiger und komplexer durchgeführt wird als die Berechnung der Sicherungsdaten im sicheren Rechenanlagenabschnitt 10.

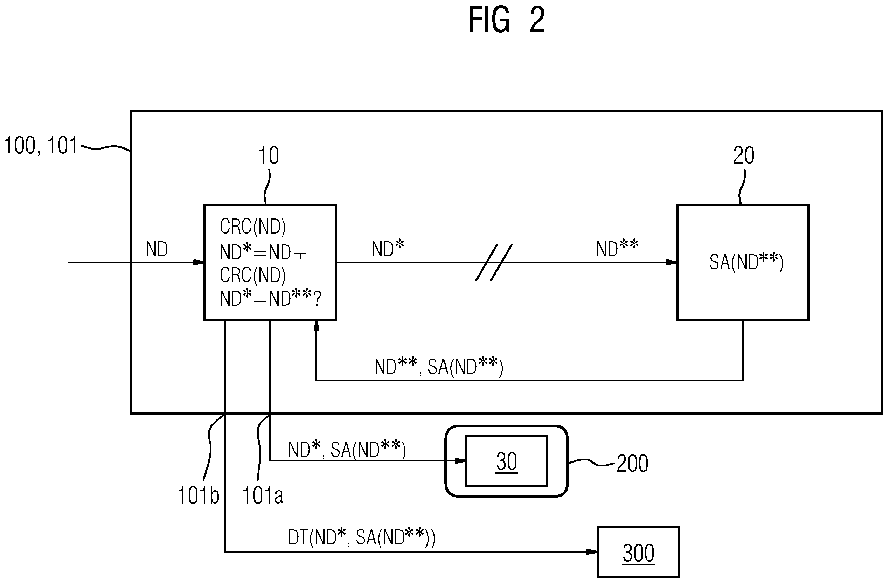

Die Figur 2 zeigt eine weitere, besonders bevorzugte Arbeitsweise der Rechenanlage 100 gemäß Figur 1.

Anders als bei dem Ausführungsbeispiel gemäß Figur 1 übermittelt der nichtsichere Rechenanlagenabschnitt 20 nicht nur den Sicherungsanhang SA(ND**) zu dem sicheren Rechenanlagenabschnitt 10, sondern auch die von ihm empfangenen Daten des sicheren Rechenanlagenabschnitts 10, die als Quelldaten ND** für die Berechnung des Sicherungsanhangs SA herangezogen worden sind. Im fehlerfreien Falle müssen die Quelldaten ND** mit den geschützten Nutzdaten ND* des sicheren Rechenanlagenabschnitts 10 identisch sein, im Falle eines Fehlers sind hingegen Abweichungen denkbar.

Nachdem der sichere Rechenanlagenabschnitt 10 vom nichtsicheren Rechenanlagenabschnitt 20 die Quelldaten ND** erhalten hat, vergleicht er diese mit den zuvor selbst gebildeten, geschützten Nutzdaten ND* inhaltlich. Ein solcher Vergleich kann beispielsweise darin bestehen, dass der sichere Rechenanlagenabschnitt 10 auf den Nutzdatenteil der empfangenen Quelldaten ND** die Sicherungsfunktion CRC selbst noch einmal anwendet und das Berechnungsergebnis CRC(Nutzdatenanteil von ND**) mit den zuvor anhand der Nutzdaten ND selbst erzeugten Sicherungsdaten CRC(ND) vergleicht.

Stimmen das Berechnungsergebnis CRC(Nutzdatenanteil von ND**) und die Sicherungsdaten CRC(ND) in einem ausreichenden Maße überein, weil sie beispielsweise identisch sind, so wird der Sicherungsanhang SA(ND**) als gültig angesehen.

Die beschriebene Vorgehensweise geht von der Überlegung aus, dass der Sicherungsanhang SA(ND**) nur dann korrekt sein kann, wenn auch die zu dessen Bildung herangezogenen Quelldaten ND** korrekt sind bzw. mit den von dem sicheren Rechenanlagenabschnitt 10 gesendeten geschützten Nutzdaten ND* identisch sind.

Im Falle eines inkorrekten Sicherungsanhangs SA(ND**) ist es selbstverständlich nicht sinnvoll, diesen weiterzuverwenden. Aus diesem Grunde wird es als vorteilhaft angesehen, wenn die Weiterbearbeitung der geschützten Nutzdaten ND* und des Sicherungsanhangs SA(ND**), also beispielsweise das Abspeichern der geschützten Nutzdaten ND* und des Sicherungsanhangs SA(ND**) und/oder das Einbetten der geschützten Nutzdaten ND* und des Sicherungsanhangs SA(ND**) in ein Datentelegramm DT, ausschließlich dann erfolgt, wenn der Sicherungsanhang SA(ND**) als gültig angesehen wird.

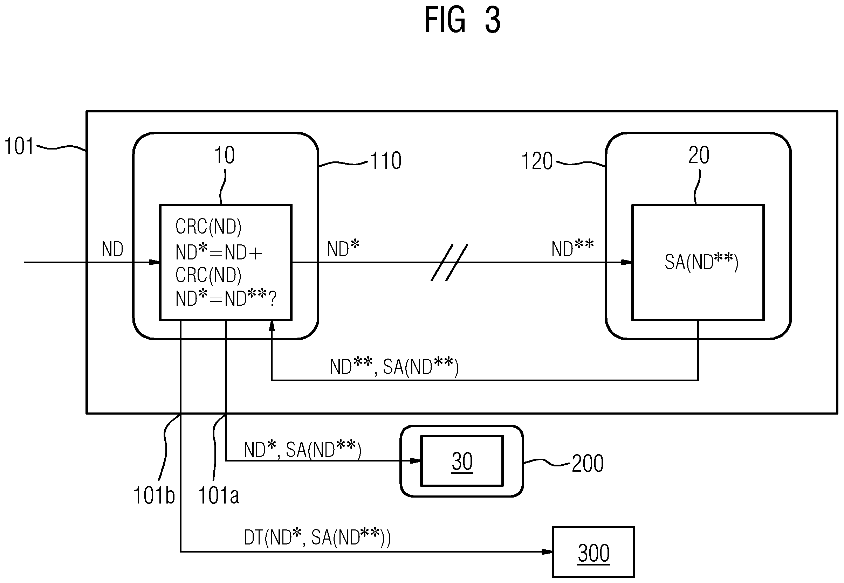

Die Figur 3 zeigt ein weiteres Ausführungsbeispiel für eine Anordnung, die zur Durchführung eines erfindungsgemäßen Verfahrens, wie es beispielhaft oben im Zusammenhang mit der Figur 2 erläutert worden ist, geeignet ist.

Die Anordnung gemäß Figur 3 entspricht der Anordnung gemäß Figur 2 mit dem Unterschied, dass der sichere Rechenanlagenabschnitt 10 und der nichtsichere Rechenanlagenabschnitt 20 in voneinander unabhängigen Rechenanlagen 110 und 120 angeordnet sind, die gemeinsam die Funktion der ersten Rechenanlage 100 gemäß Figur 2 wahrnehmen und Bestandteile eines mehrteiligen Rechnersystems 101 bilden, das zur Durchführung des beschriebenen Verfahrens geeignet ist. Im Übrigen gelten die obigen Ausführungen im Zusammenhang mit den Figuren 1 und 2 bei dem Ausführungsbeispiel gemäß Figur 3 entsprechend.

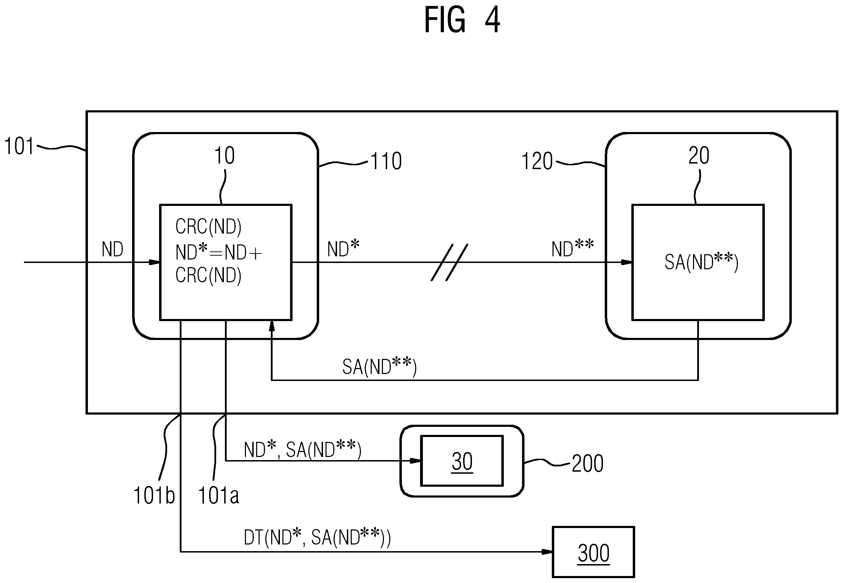

Auch ist es möglich, bei dem Ausführungsbeispiel gemäß Figur 1 den sicheren Rechenanlagenabschnitt 10 und den nichtsicheren Rechenanlagenabschnitt 20 voneinander unabhängigen Rechenanlagen 110 und 120 zuzuordnen, die gemeinsam die Funktion der ersten Rechenanlage 100 gemäß Figur 1 wahrnehmen und gemeinsam ein mehrteiliges Rechnersystem 101 bilden; dies zeigt beispielhaft die Figur 4. Im Übrigen gelten die obigen Ausführungen im Zusammenhang mit den Figuren 1 und 2 bei dem Ausführungsbeispiel gemäß Figur 4 entsprechend.

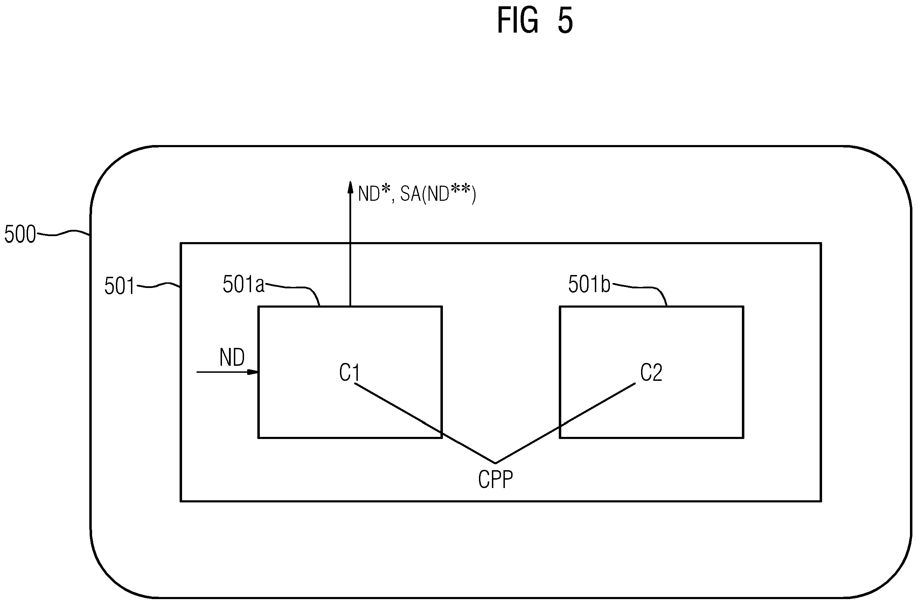

Die Figur 5 zeigt ein Ausführungsbeispiel für eine erfindungsgemäße eisenbahntechnische Komponente 500. Die Komponente 500 umfasst ein Rechnersystem 501, das einteilig sein kann, also eine einzige Rechenanlage umfassen kann, oder mehrteilig sein kann, also zwei oder mehr Rechenanlagen umfassen kann.

Das Rechnersystem 501 ist mittels eines Computerprogrammprodukts CPP programmiert, das einen sicheren Programmteil C1 zur Installation in einem sicheren Rechenanlagenabschnitt 501a des Rechnersystems 501 und einen weiteren Programmteil C2 zur Installation in einem nichtsicheren Rechenanlagenabschnitt 501b des Rechnersystems 501 umfasst. Die beiden Programmteile C1 und C2 veranlassen bei Ausführung durch ihren jeweiligen Rechenanlagenabschnitt 501a bzw. 501b das Rechnersystem 501, ein Verfahren wie oben beispielhaft im Zusammenhang mit den Figuren 1 bis 4 beschrieben durchzuführen.

Bei der eisenbahntechnischen Komponente 500 kann es sich um eine fahrzeugeigene Komponente, wie beispielsweise ein Fahrzeugsteuergerät oder eine fahrzeugeigene Sensoreinrichtung, oder um eine streckenseitige Komponente handeln.

Beispielsweise kann die eisenbahntechnische Komponente 500 eine Einrichtung sein, die als Nutzdaten ND Steuerbefehle, Steuersignale und/oder Sensordaten übermittelt, beispielsweise an eine Komponente eines Schienenfahrzeugs, wobei die Übermittlung der Nutzdaten ND in geschützter Form und mit Sicherungsanhang SA erfolgt, wie dies oben im Zusammenhang mit den Figuren 1 bis 4 erläutert wurde.

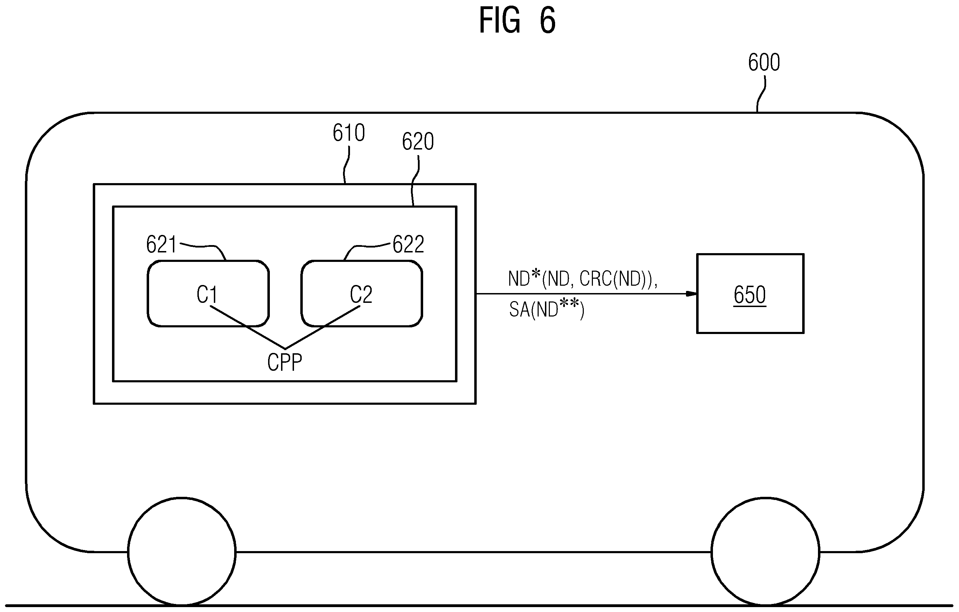

Die Figur 6 zeigt ein Ausführungsbeispiel für ein Fahrzeugsteuergerät 610, das in einem Schienenfahrzeug 600 integriert ist. Das Fahrzeugsteuergerät 610, das beispielsweise eine eisenbahntechnische Komponente 500 gemäß Figur 5 sein kann, unterstützt die Bedienung des Schienenfahrzeugs durch einen Schienenfahrzeugführer und/oder ermöglicht eine autarke Fahrt. Bei der letztgenannten Ausgestaltung bildet das Fahrzeugsteuergerät 610 beispielsweise ein sogenanntes ATO-Fahrzeugsteuergerät.

Das Fahrzeugsteuergerät 610 gemäß Figur 6 umfasst ein Rechnersystem 620, das einteilig sein kann, also eine einzige Rechenanlage umfassen kann, oder mehrteilig sein kann, also zwei oder mehr Rechenanlagen umfassen kann. Das Rechnersystem 620 ist mittels eines Computerprogrammprodukts CPP programmiert, wie es beispielhaft im Zusammenhang mit der Figur 5 beschrieben wurde. Ein Programmteil C1 des Computerprogrammprodukts CPP, der im sicheren Rechenanlagenabschnitt 621 installiert ist, und ein Programmteil C2 des Computerprogrammprodukts CPP, der im nichtsicheren Rechenanlagenabschnitt 622 installiert ist, veranlassen das Fahrzeugsteuergerät 610, ein Verfahren wie oben beispielhaft im Zusammenhang mit den Figuren 1 bis 4 beschrieben durchzuführen.

Die Figur 6 zeigt beispielhaft, dass das Fahrzeugsteuergerät 610 geschützte Nutzdaten ND* und den dazu passenden Sicherungsanhang SA(ND**) an eine andere fahrzeugeigene Komponente 650 übermitteln kann, sei es in Telegrammform oder in telegrammfreier Form, beispielsweise drahtgebunden oder per Funk. Die Komponente 650 kann anhand des Sicherungsanhangs SA(ND**) und der Sicherungsdaten CRC(ND) überprüfen, ob die Nutzdaten ND verarbeitet werden dürfen oder wegen eines Fehlers verworfen werden müssen. Bei den Nutzdaten ND handelt es sich vorzugsweise um Steuerdaten oder Steuerbefehle wie beispielsweise Fahr- oder Bremsbefehle.

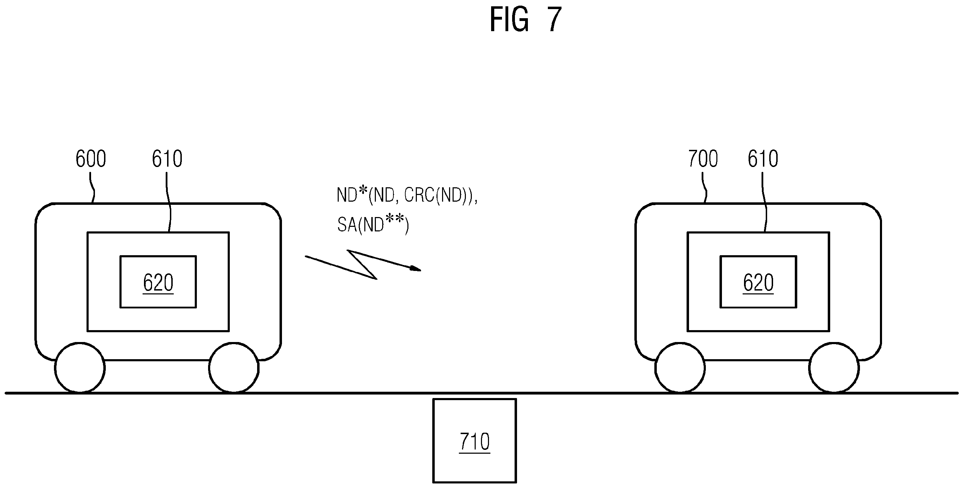

Die Figur 7 zeigt beispielhaft, dass das Fahrzeugsteuergerät 610 gemäß Figur 6 die geschützten Nutzdaten ND* und den dazu passenden Sicherungsanhang SA(ND**) auch an andere Schienenfahrzeuge 700 und/oder an streckenseitige Einrichtungen 710 übermitteln kann, sei es in Telegrammform oder in telegrammfreier Form, beispielsweise drahtgebunden oder per Funk. Die anderen Schienenfahrzeuge 700 und die streckenseitigen Einrichtungen 710 können anhand des Sicherungsanhangs SA(ND**) und der Sicherungsdaten CRC(ND) überprüfen, ob die Nutzdaten ND verarbeitet werden dürfen oder wegen eines Fehlers verworfen werden müssen.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

**Patentansprüche**

1.   Verfahren zum Bearbeiten von Nutzdaten (ND),
**dadurch gekennzeichnet, dass**

- ein sicherer Rechenanlagenabschnitt (10) einer Rechenanlage (100, 110) unter Heranziehung der Nutzdaten (ND) und einer vorgegebenen Sicherungsfunktion (CRC) Sicherungsdaten (CRC(ND)) erzeugt und mit den Sicherungsdaten (CRC(ND)) und den Nutzdaten (ND) geschützte Nutzdaten (ND*) bildet,
- der sichere Rechenanlagenabschnitt (10) die mit den Sicherungsdaten (CRC(ND)) geschützten Nutzdaten (ND*) zu einem nichtsicheren Rechenanlagenabschnitt (20) derselben oder einer anderen Rechenanlage (100, 120) transferiert,
- der nichtsichere Rechenanlagenabschnitt (20) die dort empfangenen Daten als Quelldaten (ND**) zur Bildung eines Sicherungsanhangs (SA) heranzieht,
- der nichtsichere Rechenanlagenabschnitt (20) den Sicherungsanhang (SA) in den sicheren Rechenanlagenabschnitt (10) transferiert und
- der sichere Rechenanlagenabschnitt (10) die dort zuvor gebildeten geschützten Nutzdaten (ND*) und den empfangenen Sicherungsanhang (SA) weiterbearbeitet.

2. Verfahren nach Anspruch 1,
**dadurch gekennzeichnet, dass**
die Berechnung der Sicherungsfunktion (CRC) im sicheren Rechenanlagenabschnitt (10) einen geringeren Rechenaufwand erfordert als die Berechnung des Sicherungsanhangs (SA) im nichtsicheren Rechenanlagenabschnitt (20).

3. Verfahren nach einem der voranstehenden Ansprüche,
**dadurch gekennzeichnet, dass**

- nachdem der nichtsichere Rechenanlagenabschnitt (20) den Sicherungsanhang (SA) gebildet hat, der nichtsichere Rechenanlagenabschnitt (20) die zur Bildung des Sicherungsanhangs (SA) herangezogenen Quelldaten (ND**) ebenfalls in den sicheren Rechenanlagenabschnitt (10) transferiert und
- der sichere Rechenanlagenabschnitt (10) die vom nichtsicheren Rechenanlagenabschnitt (20) erhaltenen Quelldaten (ND**) mit den zuvor selbst gebildeten, geschützten Nutzdaten (ND*) inhaltlich vergleicht.

4. Verfahren nach Anspruch 3,
**dadurch gekennzeichnet, dass**
der Sicherungsanhang (SA) als ungültig verworfen wird, wenn die Quelldaten (ND**) von den zuvor im sicheren Rechenanlagenabschnitt (10) gebildeten, geschützten Nutzdaten (ND*) über ein vorgegebenes Maß hinaus abweichen.

5. Verfahren nach einem der voranstehenden Ansprüche 2 bis 4, **dadurch gekennzeichnet, dass**
der Sicherungsanhang (SA) als gültig angesehen wird, wenn die Quelldaten (ND**) mit den zuvor im sicheren Rechenanlagenabschnitt (10) gebildeten, geschützten Nutzdaten (ND*) in einem vorgegebenen Maß übereinstimmen.

6. Verfahren nach einem der voranstehenden Ansprüche,
**dadurch gekennzeichnet, dass**
die Weiterbearbeitung der geschützten Nutzdaten (ND*) und des Sicherungsanhangs (SA) das Abspeichern der geschützten Nutzdaten (ND*) und des Sicherungsanhangs (SA) in einem Speicherabschnitt (30) außerhalb des genannten sicheren Rechenanlagenabschnitts (10) und außerhalb des genannten nichtsicheren Rechenanlagenabschnitts (20) umfasst, und zwar ausschließlich dann, wenn der Sicherungsanhang (SA) als gültig angesehen wird.

7. Verfahren nach einem der voranstehenden Ansprüche,
**dadurch gekennzeichnet, dass**
sich der genannte Speicherabschnitt (30) in einer Rechenanlage (200) befindet, die eine von der Rechenanlage (100, 110) mit dem sicheren Rechenanlagenabschnitt (10) und der Rechenanlage (100, 120) mit dem nichtsicheren Rechenanlagenabschnitt (20) unabhängige weitere Rechenanlage (200) ist.

8. Verfahren nach einem der voranstehenden Ansprüche,
**dadurch gekennzeichnet, dass**
die Weiterbearbeitung der geschützten Nutzdaten (ND*) und des Sicherungsanhangs (SA) das Einbetten der geschützten Nutzdaten (ND*) und des Sicherungsanhangs (SA) in ein Datentelegramm (DT) und das Übermitteln des Datentelegramms (DT) zu einer weiteren Rechenanlage (300) umfasst.

9. Verfahren nach einem der voranstehenden Ansprüche,
**dadurch gekennzeichnet, dass**
die vorgegebene Sicherungsfunktion (CRC) zumindest auch die Bildung eines zyklischen Redundanzcodes umfasst.

10. Rechnersystem (101),
**dadurch gekennzeichnet, dass**
das Rechnersystem (101) einen sicheren Rechenanlagenabschnitt (10) und einen unsicheren Rechenanlagenabschnitt (20) umfasst, die derart programmiert sind, dass sie gemeinsam ein Verfahren nach einem der voranstehenden Ansprüche ausführen können.

**11.** Computerprogrammprodukt (CPP),
**dadurch gekennzeichnet, dass**
das Computerprogrammprodukt (CPP) umfasst

- einen sicheren Programmteil (C1) zur Installation in einem sicheren Rechenanlagenabschnitt (10) und
- einen weiteren Programmteil (C2) zur Installation in einem nichtsicheren Rechenanlagenabschnitt (20),
- wobei die beiden Programmteile (C1, C2) bei Ausführung durch ihren jeweiligen Rechenanlagenabschnitt (10, 20) diese veranlassen, gemeinsam ein Verfahren nach einem der voranstehenden Ansprüche auszuführen.

**12.** Eisenbahntechnische Komponente (500, 610),
**dadurch gekennzeichnet, dass**
die eisenbahntechnische Komponente (500, 610) ein Rechnersystem (101) gemäß Anspruch 10 umfasst und/oder ein Verfahren nach einem der voranstehenden Ansprüche 1 bis 9 ausführen kann.

**13.** Eisenbahntechnische Komponente (500, 610) nach Anspruch 12,
**dadurch gekennzeichnet, dass**
ein sicherer Rechenanlagenabschnitt (10) der eisenbahntechnischen Komponente dazu ausgestaltet ist, die geschützten Nutzdaten (ND*) und den Sicherungsanhang (SA) an eine streckenseitige Einrichtung (710), an ein Fahrzeugsteuergerät eines anderen Schienenfahrzeugs (700) oder an eine andere Fahrzeugkomponente (650) des eigenen Schienenfahrzeugs (600) zu übermitteln.

**14.** Schienenfahrzeug,
**dadurch gekennzeichnet, dass**
das Schienenfahrzeug zumindest eine eisenbahntechnische Komponente nach Anspruch 12 oder 13 umfasst.

FIG 1

EP 4 362 363 A1

# FIG 2

FIG 3

FIG 4

EP 4 362 363 A1

EP 4 362 363 A1

# FIG 5

# FIG 6

EP 4 362 363 A1

# FIG 7

600  610

ND*(ND, CRC(ND)),
SA(ND**)

700  610

620

620

710

EP 4 362 363 A1

# EP 4 362 363 A1

Europäisches
Patentamt
European
Patent Office
Office européen
des brevets

## EUROPÄISCHER RECHERCHENBERICHT

**Nummer der Anmeldung**

**EP 22 20 4426**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/216286 A1 (JOHNSON DANIEL P [US] ET AL) 23. August 2012 (2012-08-23) * Absatz [0015] – Absatz [0041]; Abbildungen 1, 4 * | 1-14 | INV. H04L1/00 H04L67/12 H04L9/40 G06F21/64 |
| A | EP 0 525 921 B1 (SIEMENS AG [DE]) 11. März 1998 (1998-03-11) * Zusammenfassung; Abbildung 3 * | 1-14 | H03M13/09 |
| A | DE 100 11 887 A1 (SIEMENS AG [DE]) 27. September 2001 (2001-09-27) * Zusammenfassung * | 1-14 | |

**RECHERCHIERTE SACHGEBIETE (IPC)**

H04L
G06F
H03M

Der vorliegende Recherchenbericht wurde für alle Patentansprüche erstellt

| Recherchenort | Abschlußdatum der Recherche | Prüfer |
|---|---|---|
| München | 11. April 2023 | Jascau, Adrian |

**ANHANG ZUM EUROPÄISCHEN RECHERCHENBERICHT
ÜBER DIE EUROPÄISCHE PATENTANMELDUNG NR.**

EP 22 20 4426

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-04-2023

| Im Recherchenbericht angeführtes Patentdokument | Datum der Veröffentlichung | Mitglied(er) der Patentfamilie | | Datum der Veröffentlichung |
|---|---|---|---|---|
| US 2012216286 A1 | 23-08-2012 | CA | 2768819 A1 | 18-08-2012 |
| | | CN | 102708315 A | 03-10-2012 |
| | | CN | 107066899 A | 18-08-2017 |
| | | EP | 2490145 A1 | 22-08-2012 |
| | | US | 2012216286 A1 | 23-08-2012 |
| | | US | 2015033015 A1 | 29-01-2015 |
| EP 0525921 B1 | 11-03-1998 | AT | 164036 T | 15-03-1998 |
| | | DE | 4125812 A1 | 04-02-1993 |
| | | DK | 0525921 T3 | 21-12-1998 |
| | | EP | 0525921 A2 | 03-02-1993 |
| | | FI | 923481 A | 02-02-1993 |
| DE 10011887 A1 | 27-09-2001 | AT | 317185 T | 15-02-2006 |
| | | DE | 10011887 A1 | 27-09-2001 |
| | | DK | 1133096 T3 | 12-06-2006 |
| | | EP | 1133096 A2 | 12-09-2001 |
| | | ES | 2256161 T3 | 16-07-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 3659317 B1